# EUROPÄISCHE PATENTSCHRIFT

(11) **EP 0 400 482 B1**
(45) Veröffentlichungstag und Bekanntmachung des Hinweises auf die Patenterteilung: **23.11.1994**
(21) Anmeldenummer: 90109887.1
(22) Anmeldetag: 23.05.1990
(51) Int. Cl.: F16K 31/02, F16K 3/02

(54) **Mikroventil**
Microvalve
Microvanne

(30) Priorität: 29.05.1989 DE 3917396
(43) Veröffentlichungstag der Anmeldung: 05.12.1990
(73) Patentinhaber: BÜRKERT GMBH & CO. WERK INGELFINGEN, D-74653 Ingelfingen (DE); KERNFORSCHUNGSZENTRUM KARLSRUHE GMBH, D-76021 Karlsruhe (DE)
(72) Erfinder: Kowanz, Bernd, D-7515 Linkenheim (DE); Schmidt, Dirk, Dr., D-7513 Stutensee 1 (DE); Ehrfeld, Wolfgang, Dr., D-7500 Karlsruhe 41 (DE)
(74) Vertreter: Degwert, Hartmut, Dipl.-Phys.

(56) Entgegenhaltungen:
- EP-A- 0 276 156
- DE-A- 1 905 228
- FR-A- 2 639 085
- GB-A- 2 155 152
- US-A- 4 538 642

## Beschreibung

Die Erfindung betrifft ein Mikroventil nach dem Oberbegriff des Patentanspruchs 1 und ein Verfahren zu seiner Herstellung.

Aus der DE-A-1 905 228 ist bereits ein Ventil gemäß Oberbegriff des Anspruchs 1 bekannt, das mit zwei quer zur Strömungsrichtung angeordneten Ventilplatten versehen ist, die aufeinanderliegen und durch Verschieben relativ zueinander zwischen einer Öffnungsstellung, in der ihre Ventilöffnungen miteinander fluchten, und einer Schließstellung, in der die zwischen den Ventilöffnungen der einen Ventilplatte vorhandenen Stege den Ventilöffnungen der anderen Ventilplatten diese verschließend gegenüberliegen, beweglich sind. Die gestreckten Ventilöffnungen können eine Breite von weniger als 25 µm aufweisen; der Außendurchmesser der Ventilplatten liegt in der Größenordnung von etwas mehr als 10 mm. Beide Ventilplatten sind in einem gummielastischen Block gehalten, durch dessen Verformung die Ventilplatten gegeneinander verschoben werden. Die Verformung des gummielastischen Blocks erfolgt mittels einer Stellschraube, die über eine Druckplatte auf einen seitlichen Rand des Blocks einwirkt.

Die Miniaturisierung von Ventilen hat zur Entwicklung von Mikroventilen geführt, die aufgrund ihrer geringen bewegten Masse und kleinen Stellwege extrem kurze Schaltzeiten, einen geringen Verschleiß und eine geringe Leistungsaufnahme ihres Antriebs aufweisen. Mikroventile, deren Ventilstrukturen Abmessungen bis herab in den Mikrometerbereich aufweisen können, zeichnen sich ferner durch geringes Innen- und Totvolumen und die Möglichkeit einer hochgenauen Dosierung aus.

Solange derartige Mikroventile mit herkömmlichen elektromagnetischen Antrieben ausgestattet werden, sind der Miniaturisierung Grenzen gesetzt, die durch Schwierigkeiten bei der Montage makroskopischer Bauteile auf mikrotechnisch erzeugten Strukturen beruhen. Es wurden daher bereits Mikroventile in Betracht gezogen, die mit piezoelektrischem oder magnetostriktivem Antrieb oder Bimetallantrieb ausgestattet sind.

Auch bei diesen Antriebskonzepten bereitet jedoch die Montage des Antriebs mit den Ventilstrukturen erhebliche Schwierigkeiten, die der angestrebten kostengünstigen Massenfertigung im Wege stehen.

Aufgabe der Erfindung ist die Schaffung eines Mikroventils mit geringer Antriebsleistung, hohem steuerbarem Durchsatz, strömungsgünstiger Geometrie und kurzen Schaltzeiten, das die Vorzüge einer rationellen Herstellung und Montage in Massenfertigungstechnik vereinigt, sowie ein Verfahren zur Herstellung eines solchen Mikroventils anzugeben.

Diese Aufgabe wird bei einem Mikroventil der eingangs erwähnten Art, wie in Oberbegriff des Patentanspruchs 1 angegeben, durch die kennzeichnenden Merkmale des Patentanspruchs 1 gelöst.

Das erfindungsgemäße Mikroventil verfügt über einen elektrostatischen Antrieb. Zur Verwirklichung eines solchen elektrostatischen Antriebs werden neben den Ventilplatten keine zusätzlichen bewegten Teile benötigt; vielmehr kann der elektrostatische Antrieb mit den oder in die Ventilplatten integriert werden. Die Elektroden werden auf den Ventilplatten selbst gebildet, wobei sie auf verschiedenste Weise mit den vorzugsweise schlitzförmigen Ventilöffnungen kombiniert werden können. Die Ventilplatten weisen vorzugsweise jeweils mehrere schlitzförmige Ventilöffnungen auf. Die durch den elektrostatischen Antrieb realisierbare Stellkraft ist von der Anzahl der miteinander zusammenwirkenden Elektroden und ihrer Länge senkrecht zur Bewegungsrichtung abhängig. Die einander gegenüberliegenden Elektroden bilden einen Kondensator von variabler Kapazität. Bei den bevorzugten Ausführungsformen sind daher in einer verfügbaren Gesamtelektrodenfläche möglichst viele miteinander zusammenwirkende Elektrodenkanten ausgebildet. Durch Anlegen entgegengesetzter Potentiale werden Anziehungskräfte erzeugt, die eine Komponente in Richtung der gewünschten Relativverschiebung zwischen den Ventilplatten aufweisen, solange die streifenförmigen Elektroden der beiden Ventilplatten einander nicht genau fluchtend gegenüberliegen. Die gleichzeitig erzeugten Querkomponenten der Anziehungskräfte können entweder durch geeignete reibungsarme Lagerung abgefangen oder aber durch Anordnung einer beweglichen Ventilplatte zwischen zwei ortsfesten Ventilplatten, deren Elektroden auf gleichem Potential liegen, kompensiert werden.

Die zulässigen Steuerpotentiale, bei denen noch keine Überschläge zwischen den Elektroden auftreten, können durch Zwischenfügung einer Isolierschicht auf Werte in den Bereich von über 200 V erhöht werden, auch wenn die Elektroden über eine sehr dünne Isolierschicht von beispielsweise 1 µm Dicke in Gleitkontakt miteinander stehen. Bei solchen Ausführungen wird die Isolierschicht vorzugsweise aus einem Material hergestellt, das eine niedrige Gleitreibung gewährleistet.

Das erfindungsgemäße Mikroventil zeichnet sich auch durch besonders geringen Raumbedarf aus. Insbesondere ist eine sehr flache Bauweise möglich, da die Ventilplatten flach ausgebildet werden können und außer den Ventilplatten nur ein diese aufnehmendes Gehäuse benötigt wird, in dem die Strömungskanäle für das zu steuernde Medium so angeordnet werden können, daß die Strömung keine Umlenkung erfährt.

Weiterhin ist bei dem erfindungsgemäßen Mikroventil von Vorteil, daß die Dimensionierung des Antriebs unabhängig von den Ventilöffnungen gewählt werden kann, so daß eine Anpassung an unterschiedliche Anforderungen hinsichtlich der zu steuernden Mediendrücke und Durchflußmengen leicht möglich ist.

Aufgrund der sehr kurzen Schaltzeiten des erfindungsgemäßen Mikroventils lassen sich sehr feine Dosierungen und auch sehr schnelle Regelkreise verwirklichen.

Unter den in den Unteransprüchen angegebenen und in der nachfolgenden Beschreibung erläuterten Ausführungsformen des erfindungsgemäßen Mikroventils ist diejenige hervorzuheben, bei welcher die Elektroden jeder Ventilplatte auf mehrere Gruppen aufgeteilt sind, die gegeneinander um ein Maß versetzt sind, das einen Bruchteil des Abstandes zwischen benachbarten Elektroden in jeder Gruppe beträgt. Weiterhin sind die Elektroden der verschiedenen Gruppen elektrisch voneinander isoliert, so daß sie durch verschiedene Ansteuerpotentiale angesteuert werden sowie zu verschiedenen Zeitpunkten angesteuert werden können. Durch diese Ausbildung wird zum einen vermieden, daß die Ventilplatten, wenn ihre streifenförmigen Elektroden einander genau fluchtend gegenüberliegend, in einer Totpunktstellung verharren; zum anderen ist durch Ansteuerung der Ventilplatten mittels geeigneter wechselnder Rechteckpotentiale eine Steuerung der Bewegungsrichtung und eine schrittweise Schaltung in mehreren Schaltstufen möglich, wobei durch mehrere Gruppen von getrennt ansteuerbaren Elektroden die gewünschte Anzahl von Schaltschritten erreicht werden kann.

Weiterhin werden durch die Erfindung zwei Verfahren zur Herstellung eines Mikroventils zur Verfügung gestellt, die in den Patentansprüchen 16 und 17 angegeben sind.

Die Röntgentiefenlithographie ist eine Technik, die aus den KfK-Nachrichten Jahrgang 19 4/87, S. 167-179 bekannt ist und sich zur Herstellung eines Mikroventils gut eignet, weil feinste Strukturen mit zur Bestrahlungsrichtung nahezu parallelen Strukturwandungen über ausreichende Schichtdicken hergestellt werden können. Die Röntgentiefenlithographie wird mit Synchrotronstrahlung ausgeführt. Zunächst wird eine primäre Kunststofform erzeugt, die dann galvanisch mit einem Metall aufgefüllt wird. Die entstandene Metallstruktur wird dann als Formeinsatz für die Herstellung sekundärer Kunststofformen benutzt, die bei der Massenfertigung an die Stelle der primären Kunststofform treten. Diese Verfahrensweise eröffnet die Massenherstellung feinster Mikroventilstrukturen, insbesondere für das oben beschriebene Mikroventil.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: eine schematische Teil-Perspektivansicht von drei Ventilplatten einer ersten Ausführungsform des Mikroventils;
- Fig. 2: eine Draufsicht auf eine der Ventilplatten der in Fig. 1 gezeigten Ausführungsform des Mikroventils;
- Fig. 3: eine schematische Schnittansicht eines Mikroventils mit Gehäuse;
- Fig. 4: eine schematische Teil-Perspektivansicht von zwei Ventilplatten einer weiteren Ausführungsform des Mikroventils;
- Fig. 5: eine vergrößerte Teil-Draufsicht auf die in Fig. 4 gezeigten Ventilplatten;
- Fig. 6: eine Draufsicht einer Ventilplatte nach einer Weiterbildung der Ausführungsform nach Fig. 2; und
- Fig. 7: ein Diagramm, welches die Ansteuerung eines Mikroventils durch wechselnde Steuerpotentiale veranschaulicht.

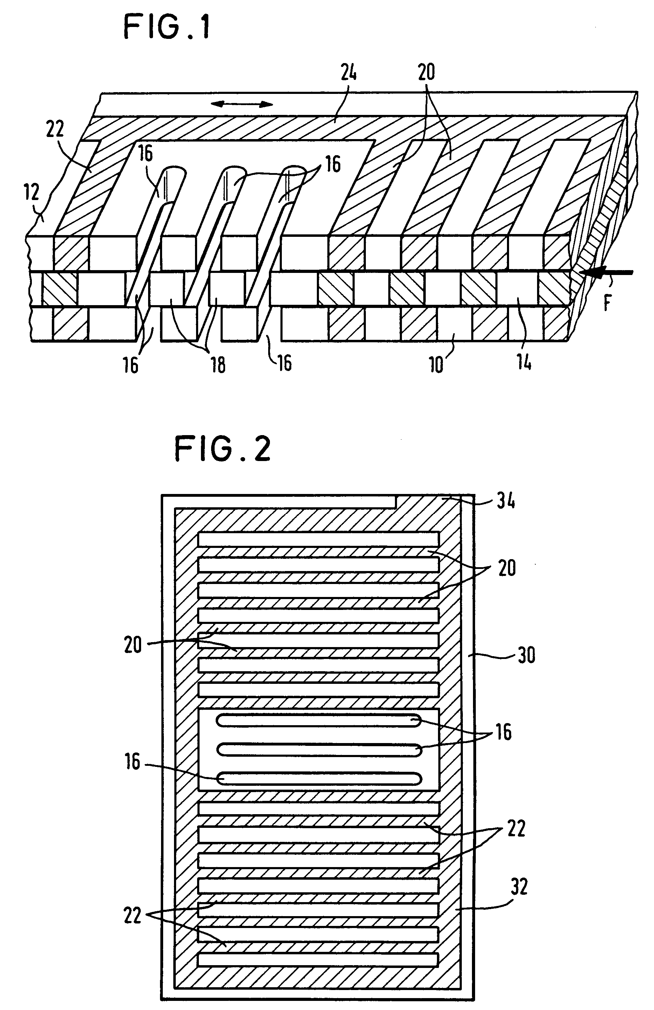

Bei der in Fig. 1 gezeigten Ausführungsform enthält das Mikroventil drei Ventilplatten: zwei mechanisch miteinander verbundene, feststehende Ventilplatten 10, 12 und eine zwischen diesen angeordnete, bewegliche Ventilplatte 14. Die Ventilplatten 10, 12 können auch als "Stator-Ventilplatten" und die Ventilplatte 14 als "Läufer-Ventilplatte" bezeichnet werden.

Die Ventilplatten 10, 12 und 14 sind mit drei schlitzförmigen Ventilöffnungen 16 versehen. Die Ventilöffnungen 16 erstrecken sich geradlinig senkrecht zur Richtung der Relativverschiebung zwischen den Ventilplatten; diese Richtung ist in Fig. 1 durch einen Doppelpfeil veranschaulicht. Alle Ventilöffnungen 16 weisen dieselbe Breite und denselben Abstand von der jeweils benachbarten Ventilöffnung auf. Der Abstand zwischen benachbarten Ventilöffnungen 16 ist etwas größer als die Breite der Ventilöffnungen. In Fig. 1 sind die Ventilplatten 10, 12 und 14 in einer Zwischenstellung gezeigt, bei welcher die zwischen den Ventilöffnungen 16 der Ventilplatte 14 befindlichen Trennstege 18 den durch die Ventilöffnungen 16 der Ventilplatten 10, 12 gebildeten Strömungsspalt teilweise verschließen. Die Ventilplatte 14 ist zwischen einer Öffnungsstellung, in welcher die Ventilöffnungen aller Ventilplatten miteinander fluchten, und einer Schließstellung, in welcher die Stege 18 der Ventilplatte 14 die Ventilöffnungen 16 der Ventilplatten 10, 12 verschließen, beweglich.

Die Stellkräfte zur Verschiebung der Ventilplatte 14 werden durch einen elektrostatischen Antrieb bereitgestellt. Dieser elektrostatische Antrieb ist in die Ventilplatten 10, 12, 14 integriert. Er besteht aus streifenförmigen Elektroden, die zumindest auf den einander zugewandten Flächen der Ventilplatten 10, 12, 14 in gleichen Abständen voneinander parallel zu den Ventilöffnungen 16 mit einem Teilungsabstand angeordnet sind, der dem Teilungsabstand der Ventilöffnungen 16 entspricht.

Bei der in Fig. 1 gezeigten Ausführungsform bestehen die Ventilplatten 10, 12 und 14 aus einem nichtleitenden Kunststoff. In den Elektroden der Ventilplatten entsprechenden Zwischenräumen ist galvanisch Metall abgeschieden. Die Elektroden sind in Fig. 1 schraffiert dargestellt und mit der Bezugszahl 20 auf der einen Seite der Ventilöffnungen 16 bzw. 22 auf der anderen Seite bezeichnet. Die Elektroden 20, 22 erstrecken sich durch die gesamte Dicke der Ventilplatten 10, 12, 14 hindurch. An ihren Enden sind sie jeweils durch eine Leiterbahn 24 elektrisch miteinander verbunden.

Die Ventilplatten 10, 12, 14 werden, wenn besonders geringe Reibungsverluste angestrebt werden, in geringem Abstand von höchstens einigen µm voneinander angeordnet. Bevorzugt werden jedoch Ausführungen, bei denen jeweils zwischen zwei Ventilplatten wenigstens eine Isolierschicht eingefügt ist, welche die elektrische Durchschlagsfestigkeit erhöht, so daß an die Elektroden 20, 22 erhöhte Steuerpotentiale angelegt werden können. Es sind Isolierschichten verfügbar, die sowohl die angestrebte hohe Durchschlagsfestigkeit und Dielektrizitätskonstante als auch eine hohe Verschleißfestigkeit und niedrige Gleitreibung aufeinander aufweisen.

Es wird nun die Wirkungsweise der in Fig. 1 dargestellten Ausführungsform beschrieben.

Die einander gegenüberliegenden Elektroden 20 bzw. 22 der Ventilplatten 10, 12, 14 bilden jeweils einen Kondensator. Zwischen den Elektroden jedes Kondensators sind Kräfte vorhanden, deren Richtung und Größe von den an die Elektroden angelegten Potentialen abhängt.

Bei der in Fig. 1 gezeigten Zwischenstellung der Ventilplatte 14 bezüglich der Ventilplatten 10, 12 sind die streifenförmigen Elektroden 20, 22 der Ventilplatte 14 gegenüber denen der Ventilplatten 10, 12 in Richtung der Relativverschiebung versetzt. Werden nun an die Elektroden 20, 22 der Ventilplatten 10, 12 gleiche und an die Elektroden der Ventilplatte 14 ein entgegengesetztes elektrisches Steuerpotential angelegt, so entstehen zwischen den jeweils einander gegenüberliegenden Elektroden Anziehungskräfte mit Kraftkomponenten in Richtung der Relativverschiebung und Kraftkomponenten senkrecht zu dieser Richtung. Die senkrecht zur Richtung der Relativverschiebung orientierten Kräfte sind beiderseits der Ventilplatte 14 gleich groß, aber entgegengesetzt gerichtet, so daß sie einander weitgehend kompensieren. Die resultierenden Kräfte wirken allein in Richtung der Relativverschiebung und bewirken eine Bewegung der Ventilplatte 14 in die Öffnungsstellung, in welcher alle Ventilöffnungen 16 miteinander fluchten.

Unter der Wirkung einer beispielsweise durch eine Feder erzeugten Rückstellkraft F erfolgt die Bewegung der Ventilplatte 14 in entgegengesetzter Richtung bis in die Schließstellung, in welcher die Trennstege 18 den Durchgang der Ventilöffnungen 16 versperren.

Fig. 2 zeigt eine vollständige Ventilplatte in Draufsicht. Aus Fig. 2 ist ersichtlich, daß der Flächeninhalt der streifenförmigen Elektroden 20, 22 ein Vielfaches des Flächeninhalts der beiden Ventilöffnungen 16 beträgt. Da die erzeugbaren Stellkräfte die Summe der durch jede einzelne Elektrode erzeugten Kräfte ist, kann die für die jeweiligen Anforderungen geeignete Stellkraft über die Anzahl von Elektroden eingestellt werden, wobei davon ausgegangen wird, daß gleich große Steuerpotentiale angelegt werden, bei denen ein Überschlag zwischen den Elektroden mit Sicherheit nicht auftritt. Es ist ferner ohne weiteres ersichtlich, daß die erzeugte Stellkraft proportional zur Länge der streifenförmigen Elektroden ist, so daß eine weitere Variationsmöglichkeit darin besteht, die Länge der streifenförmigen Elektroden geeignet zu bemessen.

Bei der in Fig. 2 gezeigten Ausbildung einer Ventilplatte 30 sind die Enden der streifenförmigen Elektroden 20, 22 an einen die gesamte Struktur umgebenden Verbindungsrahmen 32 angeschlossen, der an einer Seite der Rechteckform der Ventilplatte über einen Ansatz 34 bis zu einer Kante fortgesetzt ist. An dieser Kante kann eine Kontaktierung erfolgen, beispielsweise mittels einer Kontaktfeder oder eines Kontaktschleifers.

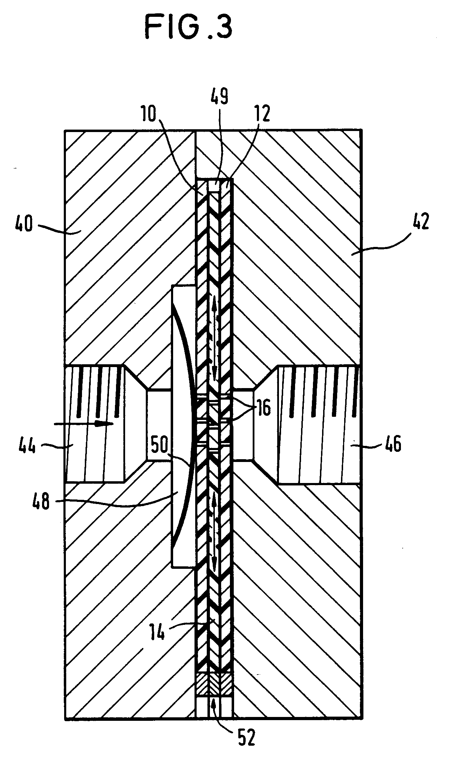

Fig. 3 zeigt ein vollständiges Mikroventil mit Ventilplatten der in den Fig. 1 und 2 gezeigten Art, die in einer Ausnehmung eines aus zwei Teilen 40, 42 bestehenden Gehäuses aufgenommen sind. Die drei Ventilplatten sind analog zu Fig. 1 mit den Bezugszahlen 10, 12 und 14 bezeichnet. Die jeweilige Anzahl von Ventilöffnungen und ihre geometrische Gestalt sowie die Anzahl und Anordnung von Elektroden können an den jeweiligen Anwendungsfall des Ventils, d.h. Durchsatz und zu schaffender Druck, optimal angepaßt werden.

Die beiden Gehäuseteile 40, 42 weisen miteinander fluchtende Strömungskanäle 44, 46 auf, welche gegenüber den Ventilöffnungen 16 in eine Aussparung 49 einmünden, die sich in dem Teil 42 befindet und in welcher die Ventilplatten 10, 12, 14 aufgenommen sind. Durch eine gewölbte Blattfeder 50, die sich einerseits an einer Wandung einer Aussparung 48 des Teils 40 und andererseits an der äußeren Fläche der Ventilplatte 10 abstützt, werden die Ventilplatten 10, 12, 14 unter leichter Vorspannung in Anlage aneinander gehalten. Die Kontaktierung der Elektroden der verschiedenen Ventilplatten 10, 12, 14 erfolgt in dem mit 52 bezeichneten Bereich der seitlichen Kanten dieser Ventilplatten.

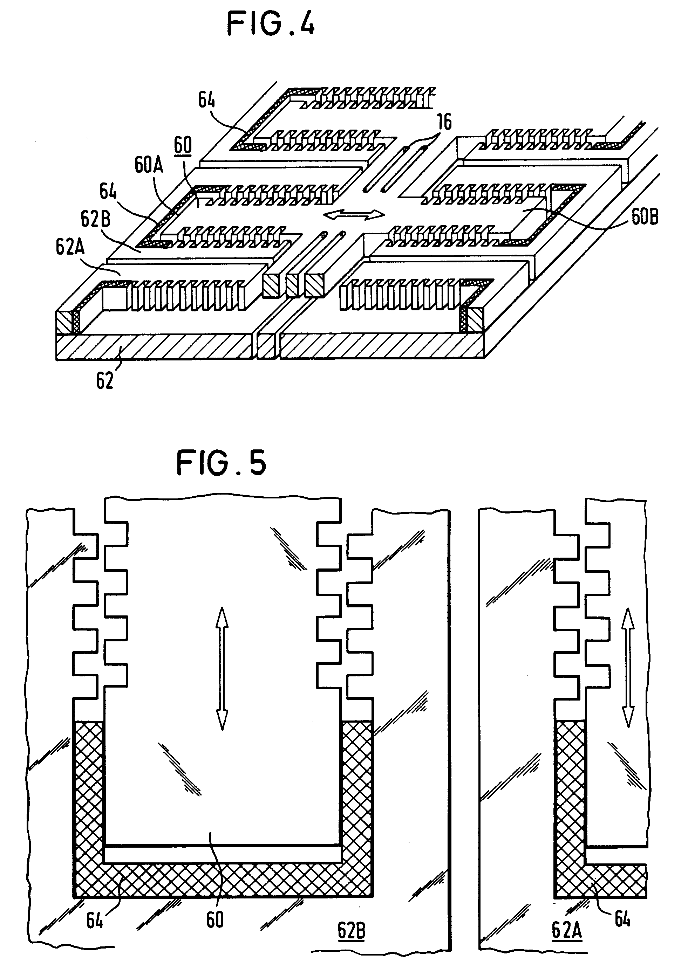

Bei der in Fig. 4 gezeigten Ausführungsform ist eine Läufer Ventilplatte 60 mit einer Stator-Ventilplatte 62, 62A, 62B kombiniert, die aus einer Grundplatte 62 und darauf aufgesetzten Elektrodenplatten 62A, 62B besteht. In den Elektrodenplatten sind Aussparungen gebildet, in welchen seitliche Ansätze 60A, 60B der Läufer-Ventilplatte 60 verschiebbar aufgenommen sind. An den einander gegenüberliegenden und zur durch einen Doppelpfeil gekennzeichneten Verschiebungsrichtung parallelen Flächen sind die Ansätze 60A, 60B und die entsprechenden Teile der Elektrodenplatten 62A, 62B mit Elektroden versehen, die in Draufsicht entsprechend der Fig. 5 kammförmig sind. Jeder Vorsprung der Kammstruktur bildet an seinem Stirnende eine Elektrode. Die Trennung zwischen benachbarten Elektroden wird durch den Freiraum zwischen benachbarten Vorsprüngen der Kammstruktur hergestellt. Die Elektrodenstrukturen bilden zum einen zwei Gruppen, die spiegelsymmetrisch beiderseits der schlitzförmigen Ventilöffnungen 16 gelegen sind, und andererseits eine Anzahl von Gruppen auf jeder Seite der Ventilöffnungen. Weiterhin ist ersichtlich, daß in Längsrichtung der Ventilöffnungen 16 mehrere Sätze dieser Ventilöffnungen paarweise vorhanden sind. Der Läufer-Ventilplatte 60 sind Führungsstreifen 64 zugeordnet, welche die seitlichen Kanten am freien Ende des Fortsatzes 60A bzw. 60B in einem konstanten und wohldefinierten Abstand von den gegenüberliegenden Wandungen der Elektrodenplatte 62B halten.

Die Elektrodenplatten 62A, 62B und die Ventilplatte 60 bestehen aus Metall, das galvanisch in den Zwischenformen einer Kynststofform eingelagert wurde. Zwischen den Elektrodenplatten 62A, 62B und Ventilplatte 60 wird vorzugsweise wenigstens eine Isolierschicht angeordnet, in ähnlicher Weise wie bei der Ausführungsform nach Fig. 1.

Das erfindungsgemäße Verfahren zur Herstellung von Mikroventilen der oben beschriebenen Art macht von den Verfahrensschritten Röntgentiefenlithographie, Galvanoformung und Kunststoffabformung Gebrauch, die zusammen als LIGA-Verfahren bezeichnet werden und in den KfK-Nachrichten, Jahrgang 19 4/87, Seite 167-179 genau beschrieben sind. Das LIGA-Verfahren erlaubt die Herstellung hochpräziser Mikrostrukturen aus Kunststoffen, Metallen oder Strukturen aus einem Metall/ Kunststoff-Verbund. Auf einer elektrisch leitfähigen Grundplatte werden Ventilplattenrohlinge angeordnet, die durch Röntgenstrahllithographie oder Kunststoffabformung mit freien bzw. ausgesparten Bereichen versehen wurden, die den Ventilöffnungen und den Elektrodenstrukturen entsprechen. Die Ventilöffnungen werden dann mittels eines Lackes, der im Vergleich zum Kunststoffmaterial des Ventilplattenrohlings leicht löslich ist, oder mittels Wachs versiegelt. Die verbleibenden, den Elektrodenstrukturen entsprechenden freien Bereiche werden dann galvanisch mit einem Metall aufgefüllt. Im nächsten Schritt wird die Oberfläche der Ventilplattenrohlinge poliert. Daraufhin werden die Ventilöffnungen wieder freigelegt. Schließlich wird die polierte Oberfläche mit einer Isolierschicht versehen. Die so fertiggestellte Ventilplatte kann dann mit den erforderlichen weiteren Ventilplatten in einem Gehäuse montiert werden.

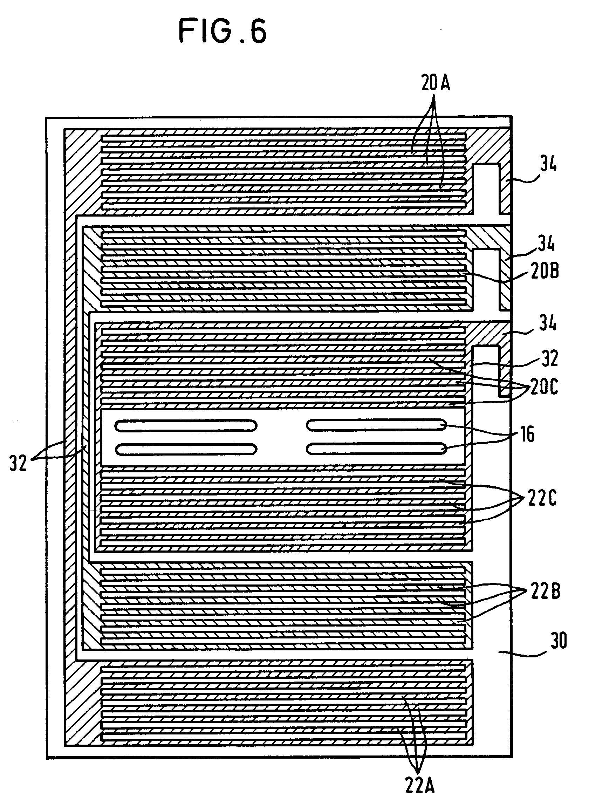

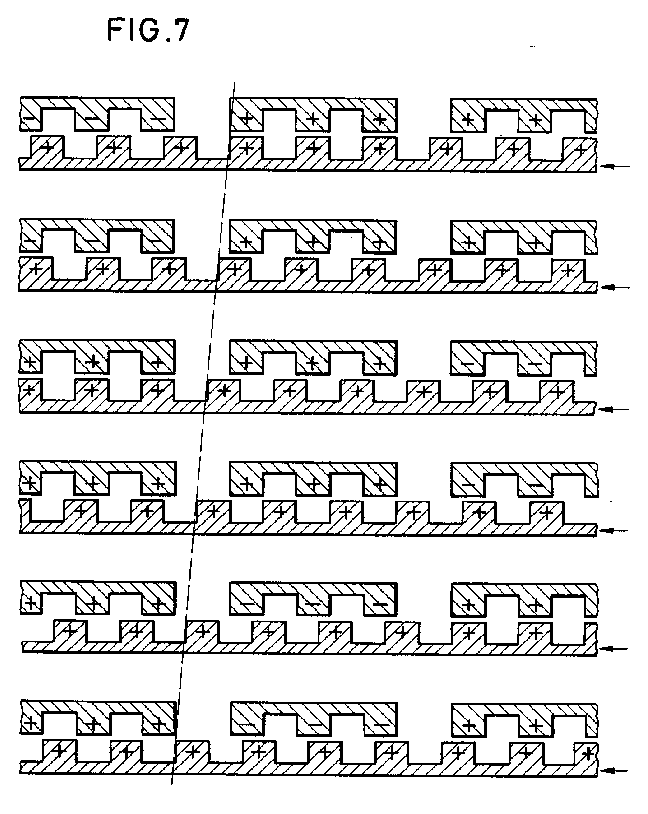

Bei der in Fig. 6 gezeigten Ausführung einer feststehenden Ventilplatte 30 eines Mikroventils sind die Elektroden in drei elektrisch voneinander getrennten Gruppen 20A/22A, 20B/22B, 20C/22C angeordnet. Die Elektrodengruppen 20A, 20B, 20C sind auf einer Seite der Ventilöffnungen 16, die Elektrodengruppen 22A, 22B, 22C auf der anderen Seite der Ventilöffnungen angeordnet. Elektroden der gleichen Gruppe sind über Leiterbahnen 32 elektrisch miteinander verbunden. Die Leiterbahnen sind über Ansätze 34 bis an die Kante der Ventilplatte geführt, wo eine Kontaktierung beispielsweise mit einer Kontaktfeder oder einem Kontaktschleifer erfolgen kann. Die Ansteuerung der einzelnen Elektrodengruppen mittels geeigneter Steuerpotentiale ist in Fig. 7 am Beispiel einer Ausführungsform erläutert, die von der nach den Fig. 4 und 5 abgeleitet ist.

In Fig. 7 sind drei Elektrodengruppen einer feststehenden Ventilplatte und die Elektroden einer beweglichen Ventilplatte in verschiedenen Ansteuerungszuständen dargestellt. Aus darstellungstechnischen Gründen sind pro Elektrodengruppe nur drei Elektroden gezeichnet. Die einzelnen Elektrodengruppen sind gegeneinander um jeweils 1/3 der Elektrodenteilung verschoben und können einzeln mit Steuerpotentialen beaufschlagt werden. Die Vorzeichen der angelegten Steuerpotentiale sind an den jeweiligen Elektroden angegeben. Die bewegliche Ventilplatte liegt mit ihren Elektroden auf konstantem, positivem Potential. Das Steuerpotential an den feststehenden Elektrodengruppen kann getrennt für jede Gruppe zwischen positivem und negativem Potential umgeschaltet werden. Der erste in Fig. 7 gezeigte Fall entspricht negativem Potential an der linken feststehenden Elektrodengruppe und positivem Potential an den beiden anderen Gruppen. Aufgrund elektrostatischer Anziehungskräfte ist die bewegliche Ventilplatte bestrebt, sich so gegenüber der feststehenden Ventilplatte auszurichten, daß die Elektroden der beweglichen Platte und die Elektroden der linken Elektrodengruppe der festen Ventilplatte sich fluchtend gegenüberliegen. Bei dem zweiten in Fig. 7 gezeigten Fall ist dieser Zustand annähernd erreicht. Bei dem dritten gezeigten Fall liegen die Elektroden der beweglichen und die Elektroden der linken Gruppe der festen Ventilplatte fluchtend gegenüber. Das Steuerpotential an der linken Elektrodengruppe wird nun positiv, statt dessen wird an der rechten Elektrodengruppe ein negatives Potential angelegt. Dies bewirkt eine Ausrichtung der beweglichen Ventilplatte nach den Elektroden der rechten Gruppe und somit die weitere Bewegung nach links, wie es in Fall vier gezeigt ist. Im Fall fünf ist die fluchtende Ausrichtung zwischen den Elektroden der rechten Gruppe und den Elektroden der beweglichen Ventilplatte erreicht, und an der rechten Gruppe wird positives Potential angelegt. Eine weitere Verschiebung kann nun durch Anlegen von negativem Potential an die mittlere Elektrodengruppe erzielt werden. Dies ist in Fall fünf und sechs dargestellt. Nach Beendigung dieser Bewegung ist der in Fall eins dargestellte Ausgangszustand wieder erreicht. Damit wurde die bewegliche Ventilplatte um eine volle Elektrodenteilung nach links verschoben. Soll die bewegliche Ventilplatte weiterbewegt werden, können die im Fall eins bis sechs gezeigten Schritte wiederholt werden. Um die bewegliche Ventilplatte nach rechts zu verschieben, muß die Reihenfolge der Ansteuerung der Elektroden der feststehenden Ventilplatte geändert werden. Bei einer Ansteuerung in der Reihenfolge links-Mitte-rechts erfolgt die Verschiebung der Ventilplatte nach rechts.

Bei praktischen Ausführungsformen eines Mikroventils nach den Fig. 1 bis 3 und 6 haben die rechteckigen Ventilplatten beispielsweise eine Größe von 20·15 mm², und auf jeder Ventilplatte befinden sich 900 Elektroden von 14 mm Länge und 10 µm Breite. Bei Ansteuerung mit einer Spannung von 220 V kann eine Stellkraft von 2,4 N bei den Ausführungsformen mit einer Elektrodengruppe und 0,8 N bei Ausführungsformen mit drei Elektrodengruppen erzeugt werden. Bei den Ausführungsformen nach den Fig. 1 bis 3 kann die Rückstellung der beweglichen Ventilplatte durch ein äußeres Rückstellelement, beispielsweise eine Rückstellfeder, erfolgen. Bei Ausführungsformen mit mehreren Elektrodengruppen sind die Elektrodengruppen der festen Ventilplatte um jeweils 6,67 µm gegeneinander versetzt und werden von phasenverschobenen Rechteckspannungen angesteuert. Durch Anordnung und Ausbildung der Elektroden in Kombination mit der Ansteuerung wird ein Verharren in einer Totpunktlage vermieden und erreicht, daß die Laufrichtung wie bei einem Dreiphasen-Synchronmotor bestimmt werden kann.

Während es sich bei den beschriebenen Ausführungsformen um Einwegventile handelt, ist ohne weiteres ersichtlich, daß auch Mehrwegventile unter Anwendung der erfindungsgemäßen Prinzipien verwirklicht werden können, indem die Ventilöffnungen und Strömungswege einander in der geeigneten Weise zugeordnet werden.

## Patentansprüche

1. Mikroventil, bei welchem mindestens zwei mit gestreckten Ventilöffnungen (16) versehene Ventilplatten (10, 12, 14) durch Verschieben relativ zueinander in parallelen Ebenen zwischen einer Öffnungsstellung, in der die Ventilöffnungen (16) der Ventilplatten (10, 12, 14) miteinander fluchten, und einer Schließstellung, in der die zwischen den Ventilöffnungen (16) der einen Ventilplatte (14) vorhandenen Stege (18) den Ventilöffnungen (16) der anderen Ventilplatten (10, 12) diese verschließend gegenüberliegen, beweglich sind, gekennzeichnet durch die folgenden Merkmale:
a) die Ventilplatten (10, 12, 14) sind auf einander in geringem Abstand gegenüberliegenden Flächen mit streifenförmigen Elektroden (20, 22) versehen;
b) an die Elektroden (20, 22) sind elektrische Steuerpotentiale anlegbar;
c) die Elektroden (20, 22) sind senkrecht zur Richtung der Relativverschiebung der Ventilplatten (10, 12, 14) orientiert.

2. Mikroventil nach Anspruch 1, dadurch gekennzeichnet, daß die Breite und der Abstand der streifenförmigen Elektroden (20, 22) voneinander annähernd gleich dem Stellweg zwischen Öffnungsstellung und Schließstellung oder kleiner als dieser ist.

3. Mikroventil nach Anspruch 2, dadurch gekennzeichnet, daß die Breite und der Teilungsabstand der streifenförmigen Elektroden (20, 22) auf einander gegenüberliegenden Ventilplatten (10, 12, 14) jeweils gleich sind.

4. Mikroventil nach einem der vorstehenden Ansprüche, dadurch gekennzeichnet, daß die Elektroden (20, 22) einander gegenüberliegender Ventilplatten (10, 12, 14) auf den einander zugewandten Flächen dieser Ventilplatten angeordnet sind.

5. Mikroventil nach einem der Ansprüche 1 bis 3, dadurch gekennzeichnet, daß die Elektroden auf zu den Ebenen der Ventilplatten (60, 62) senkrechten, zur Richtung der Relativverschiebung der Ventilplatten parallelen Flächen angeordnet sind und eine der Ventilplatten (60) in einer Ausnehmung mindestens einer auf die andere Ventilplatte (62) aufgesetzten Elektrodenplatte (62B) angeordnet ist, wobei die Elektroden dieser Elektrodenplatte (62B) an Wandungsteilen gebildet sind, welche die Ausnehmung beranden.

6. Mikroventil nach Anspruch 5, dadurch gekennzeichnet, daß die Elektroden an den Stirnflächen erhabener Wandungsteile gebildet sind, die in Draufsicht kammförmig strukturiert sind, und daß die Zwischenräume zwischen den Kammzinken durch elektrisch isolierendes Material ausgefüllt sind.

7. Mikroventil nach einem der vorstehenden Ansprüche, dadurch gekennzeichnet, daß eine bewegliche Ventilplatte (14) zwischen zwei ortsfesten Ventilplatten (10, 12) angeordnet ist und die bewegliche Ventilplatte (14) auf ihren beiden Flächen mit Elektroden (20, 22) versehen ist, die jeweils den Elektroden einer ortsfesten Ventilplatte (10, 12) gegenüberliegen.

8. Mikroventil nach einem der vorstehenden Ansprüche, dadurch gekennzeichnet, daß zwischen den Ventilplatten wenigstens eine Isolierschicht angeordnet ist.

9. Mikroventil nach einem der vorstehenden Ansprüche, dadurch gekennzeichnet, daß die Elektroden jeder Ventilplatte in gegeneinander versetzten Gruppen angeordnet sind, die elektrisch voneinander isoliert und getrennt an Steuerpotentiale anlegbar sind.

10. Mikroventil nach Anspruch 9, dadurch gekennzeichnet, daß das Maß der Versetzung der Elektroden verschiedener Gruppen einen Bruchteil des Abstandes der Elektroden jeder Gruppe voneinander beträgt.

11. Mikroventil nach Anspruch 10, dadurch gekennzeichnet, daß der Bruchteil des Abstandes etwa 1/3 beträgt.

12. Mikroventil nach einem der Ansprüche 9 bis 11, dadurch gekennzeichnet, daß die an die Elektroden angelegten Steuerpotentiale symmetrische Rechteck-Wechselpotentiale sind.

13. Mikroventil nach Anspruch 12, dadurch gekennzeichnet, daß die Elektroden einer Ventilplatte auf festes Potential gelegt sind und an die Elektroden der wenigstens einen anderen Ventilplatte ein rechteckförmiges Potential wechselnden Vorzeichens angelegt ist.

14. Mikroventil nach einem der vorstehenden Ansprüche, dadurch gekennzeichnet, daß die Ventilplatten (10, 12, 14) in der Aussparung (48, 49) eines Gehäuses (40, 42) aufgenommen sind, welches mit in die Aussparung (48, 49) einmündenden Strömungskanälen (44, 46) und mit Kontakteinrichtungen zur Kontaktierung der Elektroden versehen ist.

15. Mikroventil nach einem der vorstehenden Ansprüche, dadurch gekennzeichnet, daß die Zuordnung zwischen Ventilöffnungen und Strömungswegen zur Verwirklichung eines Mehrwegeventils ausgelegt ist.

16. Verfahren zur Herstellung eines Mikroventils, wobei mindestens zwei relativ zueinander verschiebbare, mit korrespondierenden Ventilöffnungen und mit Elektroden versehenen Ventilplatten hergestellt werden, indem
a) Ventilplattenrohlinge aus Kunststoff mit Durchbrüchen für die Ventilöffnungen und Ausnehmungen für die Elektroden durch Anwendung der Röntgentiefenlithographie oder der Kunststoffabformung versehen werden,
b) die ventilplattenrohlinge auf einer elektrisch leitfähigen Grundplatte angeordnet werden;
c) die Durchbrüche mit einem Wachs oder Lack, der gegenüber dem Kunststoff der Ventilplatten leicht löslich ist, aufgefüllt werden;
d) in den Ausnehmungen der Ventilplattenrohlinge galvanisch ein Metall zur Bildung der Elektroden abgeschieden wird; und
e) mindestens eine Oberfläche der Ventilplattenrohlinge poliert wird;
f) die Ventilöffnungen durch Beseitigen des Wachses oder Lackes in den Durchbrüchen wieder freigelegt werden;
g) die polierten Seiten der Ventilplattenrohlinge mit einer Isolierschicht versehen werden;
h) und daß die so fertiggestellten Ventilplatten von der Grundplatte gelöst und in einem Gehäuse montiert werden.

17. Verfahren zur Herstellung eines Mikroventils, wobei eine Stator- und eine Läuferventilplatte hergestellt werden, indem
a) Negative der Stator- und Läuferventilplatte aus Kunststoff unter Anwendung der Röntgentiefenlithographie oder Kunststoffabformung auf einer leitfähigen Grundplatte hergestellt werden;
b) die freien Bereiche der Kunststoffstrukturen mit einem Metall aufgefüllt und so Stator- und Läuferventilplatten aus Metall gebildet werden, wobei an den zu den Ebenen der Stator- und Läuferventilplatten senkrechten sowie zur Richtung der Relativverschiebung dieser Platten parallelen Flächen Elektroden gebildet werden;
c) die Oberflächen von Stator- und Läuferventilplatten poliert, danach der Kunststoff aufgelöst und die Oberflächen mit einer Isolierschicht versehen werden;
d) Stator- und Läuferventilplatte von der leitfähigen Grundplatte gelöst und in einem Gehäuse montiert werden.

18. Verfahren nach Anspruch 17, dadurch gekennzeichnet, daß Stator- und Läuferventilplatte gleichzeitig hergestellt werden.

19. Verfahren nach Anspruch 17, dadurch gekennzeichnet, daß zur Herstellung eines Mikroventils mit Ventilsitzen aus Kunststoff und mit einer aus einer Grundplatte (62) und mindestens einer Elektrodenplatte (62B) bestehenden Statorventilplatte die Stator- und Läuferventilplatte (60) getrennt hergestellt werden, indem
a) die Grundplatte (62) der Statorventilplatte durch Kunststoffabformung getrennt hergestellt wird;
b) die Läuferventilplatte (60) gleichfalls getrennt durch Kunststoffabformung mit leitfähigen Kunststoffen hergestellt und mit einer Isolierschicht versehen wird;
c) die Elektrodenplatte (62B) nach den Schritten a) bis d) des Anspruchs 17 hergestellt und von der leitfähigen Grundplatte gelöst wird; und
d) Läufer- und Statorventilplatte in einem Gehäuse montiert werden, wobei die Elektrodenplatte auf die Grundplatte aufgesetzt und die Läuferventilplatte teilweise in Aussparungen der Elektrodenplatte aufgenommen wird.

## Claims

1. A microvalve, in the case of which at least two valve plates (10, 12 and 14) provided with elongated valve openings (16) are able to be moved by sliding relatively to each other in parallel planes between an open position, in which the valve openings (16) of the valve plates (10, 12 and 14) are aligned with one another and a closed position. in which the lands (18) present between the valve openings (16) of the one valve plate (14) are opposite to the valve openings (16) of the other valve plates (10, 12) closing the same, characterized by the following features:
a) on surfaces, which are opposite to, and at a small distance from, each other, the valve plates (10, 12 and 14) are provided with strip-like electrodes (20, 22);
b) the electrodes (22, 22) are adapted to have electrical control potentials applied to them; and
c) the electrodes (20, 22) are orientated perpendicularly to the direction of the relative sliding of the valve plates (10, 12 and 14).

2. The microvalve as claimed in claim 1, characterized in that the width and the distance apart of the strip-like electrodes (20, 22) is approximately equal to the displacement stroke between the open position and the closed position or is less than the same.

3. The microvalve as claimed in claim 1, characterized on that the width and the pitch spacing of the strip-like electrodes (20, 22) on mutually opposite sides of the valve plates (10, 12 and 14) are respectively equal.

4. The microvalve as claimed in any one of the preceding claims, characterized in that the electrodes (20, 22) of mutually opposite valve plates (10, 12 and 14) are arranged on the facing surfaces of such valve plates.

5. The microvalve as claimed in any one of the claims 1 through 3, characterized in that the electrodes are arranged on surfaces perpendicular to the planes of the valve plates (60, 62) and parallel to the direction of the relative displacement of the valve plates and one of the valve plates (60) is arranged in a recess in at least one electrode plate (62B) mounted on the other valve plate (62), the electrodes of such electrode plate (62B) being formed on wall parts, which border the recess.

6. The microvalve as claimed in claim 5, characterized in that the electrodes are formed on the end surfaces of proud wall parts, which as seen in plan view are comb-like and in that the intermediate spaces between the comb teeth are filled up with electrically insulating material.

7. The microvalve as claimed in any one of the preceding claims, characterized in that one moving valve plate (14) is arranged between two stationary valve plates (10, 12) and on both its surfaces the moving valve plate (14) is provided with electrodes (20, 22) which are respectively opposite to the electrodes of a stationary valve plate (10, 12).

8. The microvalve as claimed in any one of the preceding claims, characterized in that between the valve plates at least one insulating layer is arranged.

9. The microvalve as claimed in any one of the preceding claims, characterized in that the electrodes of each valve plate are arranged in mutually offset groups, which are electrically insulated from one another and are adapted to be separately connected with control potentials.

10. The microvalve as claimed in claim 9, characterized in that the size of the offset of the electrodes of different groups is a fraction of the distance apart of the electrodes of each group.

11. The microvalve as claimed in claim 10, characterized in that the said fraction of the distance is equal to approximately 1/3.

12. The microvalve as claimed in any one of the claims 9 through 11, characterized in that the control potentials to the applied to the electrodes are symmetrical square wave AC potentials.

13. The microvalve 12, characterized in that the electrode of one valve plate are connected with a fixed potential and the electrodes of at least one other valve plate have a square wave potential applied to them with an alternative prefix sign.

14. The microvalve as claimed in any one of the preceding claims, characterized in that the valve plates (10, 12 and 14) are received in a recess (48, 49) in a housing (40, 42), which is provided with fluid ducts (44, 46) opening into the recess (48, 49) and with contact means for contacting the electrodes.

15. The microvalve as claimed in any one of the preceding claims, characterized in that the association between valve openings and fluid ducts is designed for producing a multiway valve.

16. A method for the production of a microvalve, wherein at least two valve plates are produced which are able to be relatively moved and are provided with corresponding valve openings and with electrodes, by
a) providing valve plate blanks of plastic with apertures for the valve openings and with recesses for the electrodes by the application of x-ray in-depth lithography or plastic replica copying,
b) arranging the valve plate blanks on an electrically conductive base plate;
c) filling the apertures with a wax or a paint, which is more readily soluble than the plastic of the valve plates;
d) galvanically depositing in the recesses of the valve plate blanks a metal for the formation of the electrode; and
e) polishing at least one surface of the valve plate blanks;
f) freeing the valve openings by removal of the wax or the paint in the apertures;
g) providing the polished sides of the valve plate blanks with an insulating layer; and
h) detaching the valve plates so manufactured from the base plate and mounting the same in a housing.

17. A method from the production of a microvalve, wherein a stator and an armature valve plate are produced by,
a) producing negatives of the stator and armature plate of plastic with the application of x-ray in-depth lithography or plastic replica copying on a conductive base plate;
b) filling the free parts of the plastic structures with a metal so that stator and armature valve plates are formed of metal, electrodes being formed on the surfaces perpendicular to the planes of the stator and the armature valve plate and parallel to the direction of the relative displacement of such plates;
c) the surfaces of the stator and armature valve plates are polished, after this plastic is dissolved and the surfaces are provided with an insulating layer; and
d) the stator and armature plate are detached from the conductive base plate are mounted in a housing.

18. The method as claimed in claim 17, characterized in that the stator and armature valve plate are produced simultaneously.

19. The method as claimed in claim 17, characterized in that for the production of a microvalve with valve seats of plastic and with a stator base plate consisting of a base plate (62) and at least one electrode plate (62B) the stator and armature valve plate (60) are produced separately, by:
a) separately producing the base plate (62) of the stator valve plate by plastic replica copying;
b) separately manufacturing the armature (60) is also separately manufactured by plastic replica copying using a conductive plastic and is provided with an insulating layer;
c) producing the electrode plate (62B) in accordance with the steps a) through d) in claim 17 and separating from the conductive base plate; and
d) mounting the armature and stator valve plate in a housing, the electrode plate being placed on the base plate and the armature valve plate being partly placed in recesses in the electrode plate.

## Revendications

1. Microsoupape sur laquelle au moins deux plaques de soupape (10, 12, 14) pourvues d'ouvertures de soupapes (16) allongées sont mobiles par déplacement relatif entre elles sur des plans parallèles entre une position d'ouverture où les ouvertures de soupape (16) des plaques (10, 12, 14) sont alignées entre elles et une position de fermeture où les entretoises (18) existant entre les ouvertures de soupape (16) d'une plaque (14) sont en regard des ouvertures (16) des autres plaques (10, 12) en fermant celles-ci, caractérisée par les particularités suivantes :
a) Les plaques de soupape (10, 12, 14) sont pourvues d'électrodes (20, 22) en forme de bandes sur des surfaces se faisant face à faible distance;
b) sur les électrodes (20, 22), peuvent être appliqués des potentiels électriques de commande;
c) les électrodes (20, 22) sont orientées perpendiculairement au sens du déplacement relatif des plaques de soupape (10, 12, 14).

2. Microsoupape selon la revendication 1, caractérisée en ce que la largeur et l'écartement des électrodes (20, 22) en forme de bandes sont approximativement égales au parcours de réglage entre la position d'ouverture et la position de fermeture ou inférieures à celui-ci.

3. Microsoupape selon la revendication 2, caractérisée en ce que la largeur et la distance de séparation des électrodes (20, 22) en forme de bandes sont respectivement égales sur des plaques de soupape (10, 12, 14) opposées.

4. Microsoupape selon l'une des revendications ci-dessus, caractérisée en ce que les électrodes (20, 22) de plaques de soupapes (10, 12, 14) opposées sont disposées sur les surfaces de ces plaques qui se font face.

5. Microsoupape selon l'une des revendications 1 à 3, caractérisée en ce que les électrodes sont disposées sur des surfaces perpendiculaires aux plans des plaques (60, 62) et parallèles au sens du déplacement relatif des plaques et en ce que l'une des plaques (60) est disposée dans un évidement d'au moins une plaque d'électrode (62B) posée sur l'autre plaque (62), les électrodes de cette plaque (62B) étant formées sur les parties de la paroi qui bordent l'évidement.

6. Microsoupape selon la revendication 5, caractérisée en ce que les électrodes sont constituées sur les surfaces frontales d'éléments de paroi en relief qui sont structurés en forme de peigne vue de dessus, et en ce que les interstices entre les dents du peigne sont remplis par du matériau électriquement isolant.

7. Microsoupape selon l'une des revendications ci-dessus, caractérisée en ce qu'une plaque de soupape mobile (14) est disposée entre deux plaques fixes (10, 12) et en ce que la plaque mobile (14) est pourvue, sur ses deux surfaces, d'électrodes (20, 22) qui font face respectivement aux électrodes d'une plaque fixe (10, 12).

8. Microsoupape selon l'une des revendications ci-dessus, caractérisée en ce qu'au moins une couche isolante est disposée entre les plaques de soupape.

9. Microsoupape selon l'une des revendications ci-dessus, caractérisée en ce que les électrodes de chaque plaque de soupape sont disposées dans des groupes décalés les uns par rapport aux autres qui sont électriquement isolés les uns des autres et peuvent être mis séparément à des potentiels de commande.

10. Microsoupape selon la revendication 9, caractérisée en ce que la grandeur du décalage des électrodes de différents groupes représente une fraction de la distance entre les électrodes de chaque groupe.

11. Microsoupape selon la revendication 10, caractérisée en ce que la fraction de la distance est d'environ 1/3.

12. Microsoupape selon l'une des revendications 9 à 11, caractérisée en ce que les potentiels de commande appliqués sur les électrodes sont des potentiels alternatifs rectangulaires.

13. Microsoupape selon la revendication 12, caractérisée en ce que les électrodes d'une plaque de soupape sont mises à un potentiel fixe et en ce qu'un potentiel rectangulaire de signe variable est appliqué sur les électrodes d'au moins une autre plaque de soupape.

14. Microsoupape selon l'une des revendications ci-dessus, caractérisée en ce que les plaques de soupape (10, 12, 14) sont logées dans l'évidement (48, 49) d'un boîtier (40,42) qui est pourvu de canaux d'écoulement (44, 46) débouchant dans l'évidement (48, 49) et de systèmes de contact pour la mise en contact des électrodes.

15. Microsoupape selon l'une des revendications ci-dessus, caractérisée en ce que la correspondance entre les ouvertures de soupape et les voies d'écoulement est étudiée pour la réalisation d'une soupape à plusieurs voies.

16. Procédé pour la fabrication d'une microsoupape, avec lequel on fabrique au moins deux plaques de soupape pouvant se déplacer de façon relative l'une par rapport à l'autre, pourvues d'ouvertures de soupape correspondantes et d'électrodes, dans lequel
a) les ébauches des plaques en plastique sont pourvues de passages pour les ouvertures de soupape et d'évidements pour les électrodes en utilisant la lithographie en profondeur par rayons X ou le moulage du plastique,
b) les ébauches des plaques de soupape sont disposées sur une plaque de base électroconductrice;
c) les passages sont remplis avec une cire ou un vernis qui est facilement soluble par rapport au plastique des plaques;
d) un métal est déposé par électrolyse dans les évidements des ébauches des plaques pour former les électrodes; et
e) au moins une surface des ébauches de plaques est polie;
f) les ouvertures de soupape sont dégagées à nouveau en enlevant la cire ou le vernis dans les passages;
g) les faces polies des ébauches de plaques sont pourvues d'une couche isolante;
h) et les plaques de soupapes ainsi confectionnées sont détachées de la plaque de base et sont montées dans un boîtier.

17. Procédé pour la fabrication d'une microsoupape, en fabriquant une plaque de soupape formant stator et une plaque de soupape formant rotor, dans lequel
a) les négatifs de la plaque de soupape formant stator et de la plaque de soupape formant rotor sont fabriqués en utilisant la lithographie en profondeur par rayons X ou le moulage du plastique sur une plaque de base conductrice,
b) les zones libres des structures plastique sont remplies d'un métal et les plaques de soupape formant stator et rotor sont formées ainsi de métal, en constituant des électrodes sur les surfaces perpendiculaires aux plans des plaques formant stator et des plaques formant rotor et parallèles au sens du déplacement relatif de ces plaques;
c) les surfaces des plaques formant stator et les plaques formant rotor sont polies, le plastique est ensuite dissous et la surface est pourvue d'une couche isolante;
d) les plaques formant stator et les plaques formant rotor sont détachées de la plaque de base conductrice et montées dans un boîtier.

18. Procédé selon la revendication 17, caractérisé en ce que les plaques de soupape formant stator et les plaques de soupape formant rotor sont fabriquées en même temps.

19. Procédé selon la revendication 17, caractérisé en ce que, pour la fabrication d'une microsoupape avec des sièges de soupape en plastique et avec une plaque de soupape formant stator comprenant une plaque de base (62) et au moins une plaque d'électrodes (62B), les plaques formant stator et les plaques formant rotor sont fabriquées séparément, en procédant de la manière suivante :
a) la plaque de base (62) de la plaque formant stator est fabriquée séparément par moulage de plastique;
b) la plaque formant rotor (60) est fabriquée séparément par moulage de plastique avec des plastiques conducteurs et est pourvue d'une couche isolante;
c) la plaque d'électrodes (62B) est fabriquée selon les étapes a) à d) de la revendication 17 et est détachée de la plaque de base conductrice; et
d) les plaques formant rotor et stator sont montées dans un boîtier, la plaque d'électrodes étant posée sur la plaque de base et la plaque formant rotor étant logée partiellement dans les évidements de la plaque d'électrodes.
